**Europäisches Patentamt**

**European Patent Office**

**Office européen des brevets**

(11) Publication number: **0 040 080**
**A2**

(12) # EUROPEAN PATENT APPLICATION

(21) Application number: **81302076.5**

(22) Date of filing: **11.05.81**

(51) Int. Cl.³: **C 08 G 69/16**
**C 08 G 69/36, C 08 L 77/02**
**C 08 J 9/26, D 01 F 6/60**

(30) Priority: **12.05.80 GB 8015637**

(43) Date of publication of application:
**18.11.81 Bulletin 81/46**

(84) Designated Contracting States:
**CH DE FR GB IT LI NL**

(71) Applicant: **COURTAULDS LIMITED**
**18, Hanover Square**
**London W1A 2BB(GB)**

(72) Inventor: **Cawley, Martin James**
**8, Alwen Drive Cwm Talwg**
**Barry South Glamorgan(GB)**

(72) Inventor: **Cawley, Christian Margaret**
**8, Alwen Drive Cwm Talwg**
**Barry South Glamorgan(GB)**

(72) Inventor: **Grice, Kenneth Darling**
**29 Vernon Close**
**Leamington Spa Warwickshire(GB)**

(72) Inventor: **Tracey, Robert John**
**20 Kingsley Crescent Bulkington Nuneaton**
**Warwickshire(GB)**

(74) Representative: **Newby, Raymond Laurence et al,**
**J.Y. & G.W. Johnson Furnival House 14/18 High Holborn**
**London WC1V 6DE(GB)**

(54) Nylon 6 polymer and process for its manufacture.

(57) Nylon 6 polymer particles are made by a melt polymerisation process in which a polyether derived from one or more alkylene oxides is incorporated in the polymerisation melt so that the nylon 6 polymer is formed as particles in a matrix of the polyether. The particles may be recovered by dissolving away the matrix of polyether, and tend to be spheroidal in shape with an average particle size in the range 5 to 1,000 microns. Polyether concentrations of 15 *per cent* or more, preferably 20 to 30 *per cent,* by weight (based upon monomer(s) plus polyether) are used where particles as such are required, but polyether concentrations below 15 *per cent* by weight are used where it is desired to extrude the molten polymerisate to elongate the particles into fibres. On removal of the polyether matrix, a fibrous structure is produced which is yarn-like when the extrudate is a rod.

- 1 -

## Nylon 6 polymer and process for its manufacture

This invention is concerned with a process for manufacturing nylon 6 polymer and with forms of the polymer which can be produced by that process. By the term "nylon 6 polymer" is meant a homopolymer of caprolactam or co-polymer of caprolactam and one or more co-polymerisable monomers comprising at least 50 per cent by weight of caprolactam units.

The conventional process for making nylon 6 polymer involves heating caprolactam together with any other monomers and, if necessary, a chain stopper and water or another suitable initiator to form a melt which is further heated at the polymerisation temperature over a number of hours. The polymer formed is a homogenous melt which is extruded from the reaction vessel and cooled in water to form a rod which is cut into roughly cylindrical chips. After washing and drying, the polymer chips may be re-melted for spinning into fibres or moulding into plastics articles.

According to this invention, a process for manufacturing nylon 6 polymer by melt polymerising caprolactam alone or together with one or more co-monomers is characterised by incorporating in the polymerisation melt at least 5 per cent by weight (based upon the combined weight of monomer(s) and polyether) of a polyether which is derived from one or more alkylene oxides and which is miscible with the melt, to produce a polymerisate comprising nylon 6 polymer in the form of particles dispersed in a matrix of the polyether.

Examples of co-monomers which may be used are nylon 6 6 salt and piperazine sebacate.

Conventional additives for polymerising to form nylon 6 polymer may be incorporated in the melt, for example water or an initiator such as amino caproic acid, a chain stopper such as benzylamine, and a delustring agent.

Examples of polyethers which may be used are poly(ethylene oxide)- or poly(ethylene glycol) -, poly(propylene oxide) and co-polymers of ethylene oxide and propylene oxide.

The emulsion form of the product, i.e. with particles of nylon 6 polymer dispersed in a matrix of the polyether, is stable at concentrations of polyether of about 15 per cent by weight (based upon the combined weight of monomer(s) and polyether) and more, with 20 to 30 per cent being a preferred range. At concentrations below about 15 per cent it is usually necessary to carry out a part, preferably the latter part, or the whole, of the polymerisation under vacuum. Otherwise, the emulsion tends to be inverted, i.e. to have particles of polyether in a matrix of nylon 6 polymer. The vacuum stage causes the melt to froth with loss of caprolactam from the melt and this favours the desired nylon-in-polyether emulsion. At concentrations of polyether of 15 per cent by weight or more in the melt it may also be beneficial to carry out at least part of the polymerisation under vacuum, preferably the latter part. Excessive stirring of the polymer melt also tends to cause inversion of the emulsion to the polyether-in-nylon form at these lower concentrations of polyether and should be avoided. As stirring proceeds or intensifies the particle diameter of the nylon 6 polymer particles becomes gradually smaller until a mixed-phase system occurs followed by complete inversion.

Other factors which affect the average particle diameter are the final polymerisation temperature and the concentration of polyether. Other factors being constant, the average particle diameter increases both with increasing temperature and increasing polyether concentration.

The nylon 6 polymer particles produced are themselves novel and form part of the invention. These particles generally have an average particle diameter in the range of 5 to 1,000 microns and in this range have a shape tending to the spheroidal.

The particles may be taken as product from the melt in the reactor by extruding the melt and dissolving away the polyether. Provided the concentration of the polyether is sufficiently high, about 15 per cent by weight or more, the shear imparted during extrusion is insufficient to distort the spheroidal shape of the particles significantly. Washing of the extrudate dissolves the polyether leaving the particles free to be filtered from the wash water and dried.

With polyether concentrations below about 15 per cent by weight, and especially in the 5 to 10 per cent range, extrusion produces elongation of the particles into fibres which are aligned in the direction of extrusion within the polyether matrix. The cooled extrudate is apparently a uniform solid as with normal nylon 6 production, but on being worked, as by flexing for example, the polyether matrix falls away as a powder, leaving an expanded fibrous structure. If the extrudate is a rod, this produces a structure which is like a staple fibre yarn in appearance and handle. An extrudate in sheet form gives a structure like a non-woven fabric. Such an extrudate, both in its initial form and its subsequent expanded fibrous form, is also part of the invention.

The extruded rod may be stretched, with or without the application of heat, to attenuate the fibres and make them finer and stronger. The stretching process itself tends to separate the fibres, but the desired expanded fibrous form requires further working. One convenient and effective way of doing this is to pass the rod through a jet of turbulent gas which loosens the structure to give a bulked yarn. The gas may be heated and may be, for example, hot air or steam.

The fibrous products have relatively clearly defined uses in the field of yarns and textiles, but the spheroidal particles present a wide variety of uses. Possibly the most important of these are in the engineering field, where the low friction and high wear properties of the particles combine with their spheroidal shape to make then useful in lubricating applications. Thus, they may be used dry as a low friction bed or interlayer or as a dry lubricant, or as an additive to a liquid to impart or improve lubricant properties. Other uses in the engineering field include porous articles made by sintering the particles, and a lapping or polishing medium comprising the nylon particles alone or in combination with abrasive particles.

The invention is illustrated by the following Examples:

Examples 1 to 4

The following reactants were added to a reaction vessel having a heater, a stirrer, a vacuum pump connection and an outlet in the base:-

| | |
|---|---|
| Caprolactam | 240.0 gms |
| Poly(ethylene glycol) of 4000 molecular weight - (PEG 4000) | 60.0 gms (20% by weight) |
| 6 - aminocaproic acid | 4.8 gms |

The reactants were heated up to the polymerisation temperature, with the melt being stirred at 120 revolutions per minute (r.p.m.), and polymerisation was carried out at that temperature for 19 hours under a slow stream of nitrogen. No vacuum was applied throughout the process. The resulting melt was extruded by nitrogen pressure from the base of the reaction vessel into an enamelled dish where it set to a brittle solid. The solid comprised spheroidal particles of nylon 6 in a PEG matrix. The latter was dissolved away using methanol to leave the spheroidal particles free. These were assessed for particle diameter using a microscope fitted with an eye-piece graticule and the results expressed as a number average.

The average particle diameter produced at four different polymerisation temperatures is shown below:-

| Example | Polymerisation Temperature (°C) | Average Particle diameter (µm) |
|---------|--------------------------------|-------------------------------|
| 1 | 240 | 8.5 |
| 2 | 250 | 11.0 |
| 3 | 260 | 27.0 |
| 4 | 270 | 35.0 |

Examples 5 and 6

The procedure of Examples 1 to 4 was repeated at a polymerisation temperature of 260°C but using two different concentrations of PEG 4000. The effect on particle diameter is shown below:-

| Example | Weight of PEG 4000 (gms) | Average Particle diameter (µm) |
|---------|--------------------------|-------------------------------|
| 5 | 80 (25% by wt) | 780 |
| 6 | 103 (30% by wt) | 900 |

Example 7

The following reactants were added to the reaction vessel used for the process of Examples 1 to 6:-

| | |
|---|---|
| Caprolactam | 368.0 gms |
| PEG 4000 | 32.0 gms (8.0% by wt) |
| 6 - aminocaproic acid | 8.0 gms |
| Benzylamine | 1.28 gms. |

The reactants were heated up to a temperature of 200°C and then stirred for 10 minutes. The temperature of the melt was then raised to the polymerisation temperature of 260°C and polymerisation was carried out at that temperature over a period of 19 hours without any further stirring and under a slow stream of nitrogen. At the end of this period a vacuum of 400 Pa (3 mm Hg) was applied to the melt for 30 minutes. The melt boiled and frothed and caprolactam was distilled off.

The resulting polymer was extruded from the reaction vessel into a water bath to form a flexible rod 0.6 mm in diameter which was taken up on a Shirley winding drum at 55 metres/min. The flexible rod was cold drawn at a draw ratio of 3:1. On being flexed the drawn rod expanded into a fibrous yarn-like structure with the PEG falling away as a powder. The diameter of the fibres was generally in the range 2 to 10 microns.

Examples 8, 9 and 10

The procedure of Example 7 was repeated except that the PEG was replaced by the following additives, all at 8 per cent by weight.

| Example 8 | Poly(propylene glycol) (PPG) of molecular weight 2025 |
| --- | --- |
| Example 9 | Pluronic F 38 (Wyandotte) - an 80/20 PEG/PPG co-polymer of molecular weight about 4750 |
| Example 10 | Pluronic P85 (Wyandotte) - a 50/50 PEG/PPG co-polymer of molecular weight about 4500 |

In each case a fibrous rod was formed as in Example 7.

Examples 11, 12 and 13

The following reactants were added to the reaction vessel used for the process of the previous Examples:-

| Caprolactam | 112 gms |
| --- | --- |
| Piperazine sebacate | 28 gms |
| PEG 4000 | 60 gms (30% by wt) |

The reactants were heated up to the polymerisation temperature and held at that temperature for 18 hours under a slow stream of nitrogen. The melt was stirred throughout at a stirrer speed of 150 r.p.m.

The polymerised melt was run off into an enamelled dish which was cooled with solid $CO_2$. The resulting solid was easily broken up and when the resulting pieces were dispersed in hot water, the PEG dissolved leaving spheres of the nylon co-polymer.

The average particle diameter of the spheres was determined for co-polymer produced at three different polymerisation temperatures:-

| Example | Polymerisation Temperature (°C) | Average Particle diameter (mm) |
|---------|---------------------------------|--------------------------------|
| 11 | 240 | 0.5 |
| 12 | 250 | 1.0 |
| 13 | 255 | 2.5 |

Example 14

The procedure of Example 11 was repeated but with the following reactants substituted for those used in that Example:-

| | |
|---|---|
| Caprolactam | 126 gms |
| Nylon 6 6 salt | 14 gms |
| PEG 4000 | 60 gms (30% by wt) |

The spheres of nylon 6 / nylon 6 6 co-polymer produced had an average particle diameter of 0.5 mm.

## CLAIMS

1. A process for manufacturing nylon 6 polymer by melt polymerising caprolactam alone or together with one or more co-monomers, characterised by incorporating in the polymerisation melt at least 5 per cent by weight (based upon the combined weight of monomer(s) and polyether) of a polyether which is derived from one or more alkylene oxides and which is miscible with the melt, to produce a polymerisate comprising nylon 6 polymer in the form of particles dispersed in a matrix of the polyether.

2. A process as claimed in claim 1, characterised in that the polyether is a poly(ethylene oxide) or a poly(propylene oxide) or a copolymer of ethylene oxide and propylene oxide.

3. A process as claimed in claim 1 or claim 2, characterised in that the caprolactam is co-polymerised with nylon 6 6 salt and/or piperazine sebacate.

4. A process as claimed in any of claims 1 to 3, characterised in that at least a part, preferably the latter part, of the polymerisation is carried out under vacuum.

5. A process as claimed in any of claims 1 to 4, characterised in that the concentration of the polyether in the melt (based upon the combined weight of monomer(s) and polyether) is 15 per cent by weight or more.

6. A process as claimed in any of claims 1 to 4, characterised in that the concentration of the polyether in the melt (based upon the combined weight of monomer(s) and polyether) is 20 to 30 per cent by weight.

7. A process as claimed in claim 4, characterised in that the concentration of the polyether in the melt (based upon the combined weight of monomer(s) and polyether) is less than 15 per cent by weight.

8. A process as claimed in claim 7, characterised in that the polyether concentration is 5 to 10 per cent by weight (based upon the combined weight of monomer(s) and polyether).

9. A process as claimed in any of claims 1 to 8, characterised in that the nylon 6 polymer particles are solidified while dispersed in the polyether matrix and then the polyether matrix is removed from the solid particles.

10. A process as claimed in claim 7 or claim 8, characterised in that the polymerisate whilst still molten is extruded into a cooling medium to form a solid extrudate in which the nylon 6 polymer particles have been elongated by the extrusion process to the form of fibres which are disposed in alignment with the direction of extrusion within a polyether matrix.

11. A process as claimed in claim 10, characterised in that the extrudate is stretched to attenuate the nylon 6 polymer fibres.

12. A process as claimed in claim 10 or claim 11, characterised in that the polyether matrix is subsequently removed from the extrudate to produce a coherent structure of nylon 6 polymer fibres.

13. A process as claimed in any of claims 10 to 12, characterised in that the extrudate is in the form of a rod, and the extruded rod, or a fibrous structure derived from it, is passed through a jet of turbulent fluid to form an expanded fibrous structure like a yarn.

14. Nylon 6 polymer, characterised by being in the form of particles of shape tending to the spheroidal, with an average particle diameter in the range 5 to 1,000 microns.

15. An extrudate of nylon 6 polymer, characterised by being in the form of fibres of nylon 6 polymer aligned in the direction of extrusion and disposed within a matrix of a polyether derived from an alkylene oxide.

16. An extrudate as claimed in claim 15, characterised by being in the form of a rod.

17. A process for the manufacture of a fibrous structure of nylon 6 polymer fibres, characterised in that the polyether matrix is removed from an extrudate as claimed in claim 14 or claim 15.